# EUROPEAN PATENT APPLICATION

(11) **EP 4 831 703 A1**
(43) Date of publication of application: **28.10.2026**
(21) Application number: 24906836.2
(22) Date of filing: 10.09.2024
(51) Int. Cl.: G02B 6/36, B08B 1/30

(54) **OPTICAL CONNECTOR CLEANING TOOL**

(30) Priority: 20.12.2023 JP 2023214989
(71) Applicant: FUJIKURA LTD., Tokyo 135-8512 (JP)
(72) Inventor: SAKAGUCHI, Yuya, Sakura-shi, Chiba 285-8550 (JP)
(74) Representative: Ter Meer und Partner mbB
(86) International application number: PCT/JP2024/032448
(87) International publication number: WO 2025/134446

(57) **Abstract**

An optical connector cleaning tool 100 includes a cleaning shaft 160 that includes a cleaning head 170 at a front end, the cleaning head 170 having a pressing surface 171a that presses a cleaning element 105 against a connection end surface 12 of an optical connector 10, the cleaning element 105 being hung on the pressing surface 171a, a guide nozzle 190 that houses the cleaning shaft 160, and a case 120 that houses a base end portion of the guide nozzle 190 such that the guide nozzle 190 is relatively movable. The guide nozzle 190 and the case 120 have electrical conductivity. The guide nozzle 190 includes a leaf spring portion 198 that is in contact with the case 120 and presses the case 120. The guide nozzle 190 and the case 120 are electrically connected via the leaf spring portion 198.

## Description

### Technical Field

The present invention relates to an optical connector cleaning tool that cleans a connection end surface of an optical connector.

In designated states where incorporation of documents by reference is accepted, the contents of Patent Application No. 2023-214989 filed in Japan on December 20, 2023 is incorporated herein by reference and is regarded as a part of the description of this specification.

### Background Art

A cleaning mechanism that rotates a cleaning rod in contact with a connection end surface of an optical connector by means of a motor to remove adhered substances from the connection end surfacer is known (for example, see Patent Document 1). The cleaning mechanism causes a shaft to which an attachment fitted in an optical connector housing is fixed to slide with respect to a collar fixed to a drive unit including a motor, and thus turns on/off a power supply to the motor.

### Prior Art Document

### Patent Document

Patent Document 1: JP-A-2002-277681

### Summary of Invention

### Problems to be Solved by Invention

In the above-described cleaning mechanism, static electricity occurs in a sliding portion where the shaft slides with respect to the collar, and the shaft becomes charged in some cases. Meanwhile, in an ESD Protected Area (EPA) for, for example, the manufacturing process of an electrically-sensitive electronic component, such as a semiconductor device, Electro-Static Discharge (ESD) needs to be promptly dissipated. Therefore, the above-described cleaning mechanism is not allowed to be used in the ESD protected area in some cases.

An object to be achieved by the present invention is to provide an optical connector cleaning tool that allows for promptly dissipating static electricity generated by sliding between components.

### Means for Solving Problems

[1] Aspect 1 of the present invention is an optical connector cleaning tool that cleans a connection end surface of an optical connector, comprising: a cleaning shaft that comprises a cleaning head at a front end, the cleaning head having a pressing surface that presses a cleaning element against the connection end surface, the cleaning element being hung on the pressing surface; a tubular member that houses the cleaning shaft; and a case that houses a base end portion of the tubular member such that the tubular member is relatively movable, wherein the tubular member and the case have electrical conductivity, the tubular member or the case comprises an elastic deformation portion that is in contact with the case or the tubular member and presses the case or the tubular member, and the tubular member and the case are electrically connected via the elastic deformation portion.
[2] Aspect 2 of the present invention may be the optical connector cleaning tool of Aspect 1, wherein the elastic deformation portion may include a first leaf spring included in the tubular member, and the first leaf spring may be in contact with an inner surface of the case and may press the inner surface outward.
[3] Aspect 3 of the present invention may be the optical connector cleaning tool of Aspect 1 or 2, wherein the elastic deformation portion may include a second leaf spring included in the case, and the second leaf spring may be in contact with an outer surface of the tubular member and may press the outer surface inward.
[4] Aspect 4 of the present invention may be the optical connector cleaning tool of any one of Aspects 1 to 3, wherein the elastic deformation portion may have a pressing force Fₐ to press the case or the tubular member, and the pressing force Fₐ may satisfy Formula (1) below. $0.5 \left[N\right] < {F}_{a} < 12 \left[N\right]$ (1)
[5] Aspect 5 of the present invention may be the optical connector cleaning tool of any one of Aspects 1 to 4, wherein the case may comprise a holding portion held by an operator who operates the optical connector cleaning tool.
[6] Aspect 6 of the present invention may be the optical connector cleaning tool of any one of Aspects 1 to 5, wherein the tubular member and the case may be made of an electrically conductive resin material.
[7] Aspect 7 of the present invention may be the optical connector cleaning tool of any one of Aspects 1 to 6, wherein the optical connector cleaning tool may comprise a supply collection mechanism that supplies the cleaning element to the pressing surface of the cleaning head and collects the cleaning element from the pressing surface as the tubular member relatively moves with respect to the case.

### Effects of Invention

In the present invention, the tubular member and the case have electrical conductivity, the tubular member or the case includes an elastic deformation portion that is in contact with the case or the tubular member and presses the case or the tubular member, and the tubular member and the case are electrically connected via the elastic deformation portion. Thus, static electricity generated in the tubular member by sliding with the case is allowed to be promptly dissipated via the case.

### Brief Description of Drawings

[FIG. 1] FIG. 1 is a front view illustrating a multi-fiber collective connection type optical connector as a cleaning target of an optical connector cleaning tool in a first embodiment of the present invention.
[FIG. 2] FIG. 2 is a perspective view illustrating the optical connector cleaning tool in the first embodiment of the present invention.
[FIG. 3] FIG. 3 is an exploded perspective view of the optical connector cleaning tool in the first embodiment of the present invention.
[FIG. 4] FIG. 4 is an exploded perspective view of an extending member in the first embodiment of the present invention.
[FIG. 5] FIG. 5 is a drawing illustrating a conductive path of the optical connector cleaning tool in the first embodiment of the present invention and is a cross-sectional view taken along the line V-V in FIG. 2.
[FIG. 6] FIG. 6(a) is a perspective view illustrating a modification of a case in the first embodiment of the present invention, and FIG. 6(b) is a cross-sectional view of an optical connector cleaning tool taken along VIB-VIB in FIG. 6(a).
[FIG. 7] FIG. 7 is a front view illustrating a single-fiber connection type optical connector as a cleaning target of an optical connector cleaning tool in a second embodiment of the present invention.
[FIG. 8] FIG. 8 is a perspective view illustrating an optical connector cleaning tool in the second embodiment of the present invention.
[FIG. 9] FIG. 9 is an exploded perspective view of the optical connector cleaning tool in the second embodiment of the present invention.
[FIG. 10] FIG. 10(a) is a front view illustrating a front end portion of a cleaning head in the embodiment of the present invention, and FIG. 10(b) is a cross-sectional view taken along the line XB-XB in FIG. 10(a).
[FIG. 11] FIG. 11 is a drawing illustrating a conductive path of the optical connector cleaning tool in the second embodiment of the present invention and is a cross-sectional view taken along the line XI-XI in FIG. 8.
[FIG. 12] FIG. 12 is a side view illustrating a modification of a case in the second embodiment of the present invention.

### Mode(s) for Carrying out the Invention

The following describes embodiments of the present invention based on the drawings.

### <<First Embodiment>>

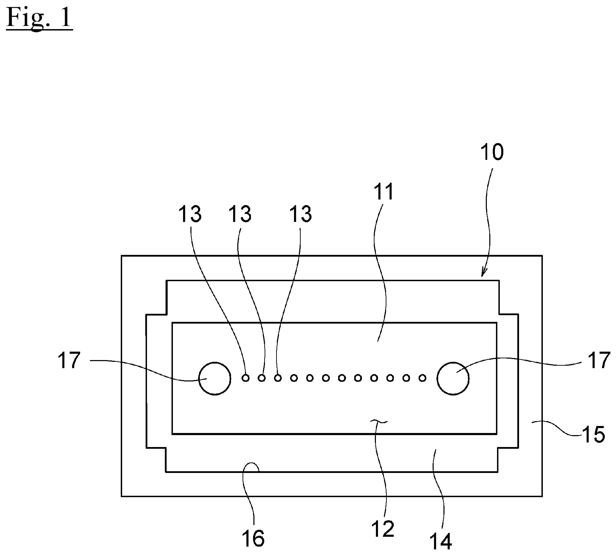

An optical connector cleaning tool 100 in the present embodiment is a cleaner that cleans a connection end surface of an optical connector that connects optical fibers. An optical connector 10 as a cleaning target of the optical connector cleaning tool 100 is a multi-fiber collective connection type optical connector plug that simultaneously connects a plurality of optical fibers 13. FIG. 1 is a front view illustrating the optical connector 10 as the cleaning target of the optical connector cleaning tool 100 in the present embodiment.

The optical connector 10 includes a ferrule 11 that has a flat (rectangular) sectional shape (end surface shape) as illustrated in FIG. 1. The ferrule 11 is a so-called MT (Mechanical Transferable) ferrule and has a plurality of (for example, 12) fiber holding holes arranged along a longitudinal direction of a cross section of the ferrule 11. The optical fibers 13 are respectively inserted into the plurality of fiber holding holes, and the optical fiber 13 is fixed to the ferrule 11 with an adhesive agent. The plurality of optical fibers 13 are each exposed from a connection end surface 12 of the ferrule 11. The ferrule 11 is held by a housing 14. As the above-described ferrule 11, an MT ferrule specified in JIS C 5981 or JIS C 5982 may be used.

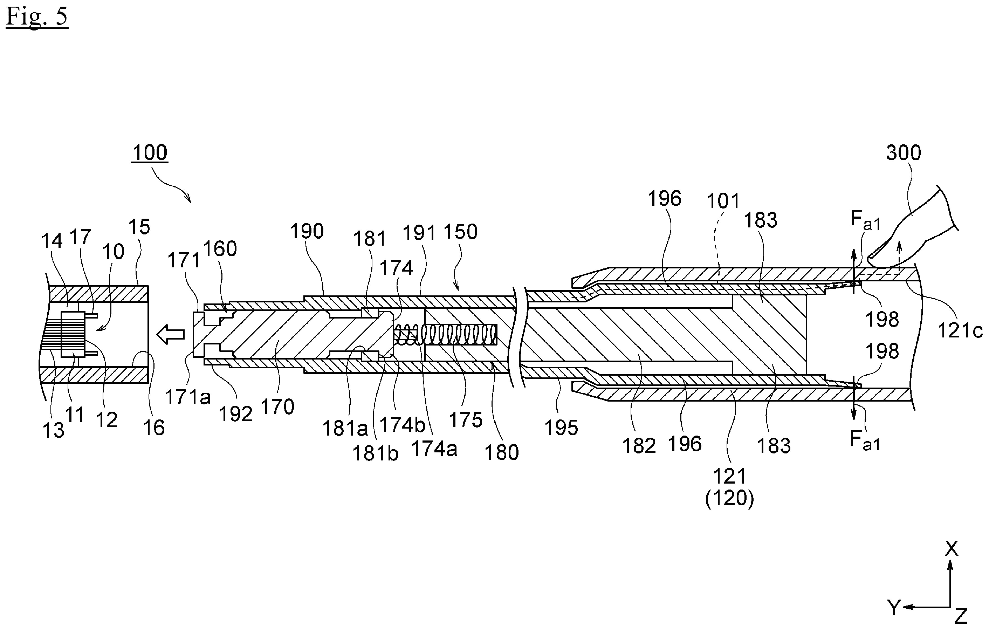

When a pair of the optical connectors 10 including the above-described ferrules 11 are connected, the pair of optical connectors 10 are inserted into insertion ports 16 on both sides of a sleeve-shaped adapter 15 (see FIG. 5). The optical fibers 13 each exposed from the connection end surface 12 of the ferrule 11 are optically connected to each other by abutting the connection end surfaces 12 of the ferrules 11 of the pair of optical connectors 10. At this time, a guide pin 17 of one of the ferrules 11 is inserted into a guide hole (not illustrated) of the other ferrule 11, and thus, the optical connectors 10 are positioned with respect to each other with high accuracy.

If a foreign matter (contaminant), such as dirt, dust, and oil, is adhered to the connection end surface 12 of the ferrule 11 at the time of this abutting, it may become a cause of a damage during a connection and a disconnection, and an increase of transmission loss, and the like. Therefore, the connection end surface 12 of the ferrule 11 is cleaned using the optical connector cleaning tool 100 described below before the optical connectors 10 are connected. At the time of this cleaning, the optical connector 10 as the cleaning target is inserted into one of the insertion ports 16 of the adapter 15, the optical connector cleaning tool 100 is inserted into the other insertion port 16 of the adapter 15, and thus, the connection end surface 12 of the ferrule 11 of the optical connector 10 is cleaned.

While the optical connector 10 described above is an optical connector plug used in a plug-adapter-plug coupling system, the end surface of the ferrule of an optical connector receptacle used in a plug-receptacle coupling system may be cleaned using the optical connector cleaning tool 100 described below. Specifically, the optical connector receptacle includes a ferrule attached to a front end of the optical fiber and incorporated into a housing into which the optical connector plug is inserted.

Alternatively, a cap having an inner hole having the same shape as an inner hole of the adapter may be attached to a front end of the optical connector cleaning tool 100, and the optical connector plug may be inserted into the cap to clean the connection end surface of the optical connector plug alone in a state where the optical connector plug is not inserted into the adapter.

The following describes a configuration of the optical connector cleaning tool 100 in the present embodiment in detail with reference to the drawings.

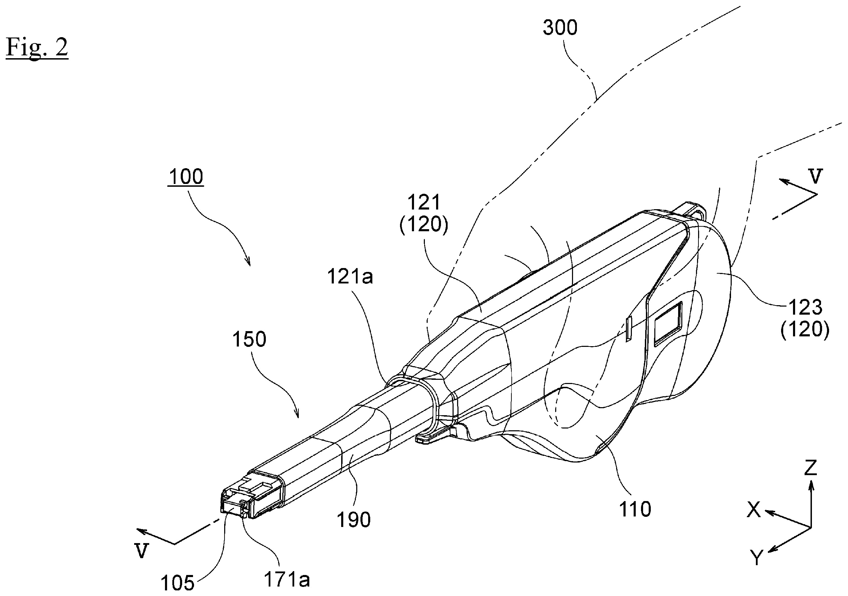

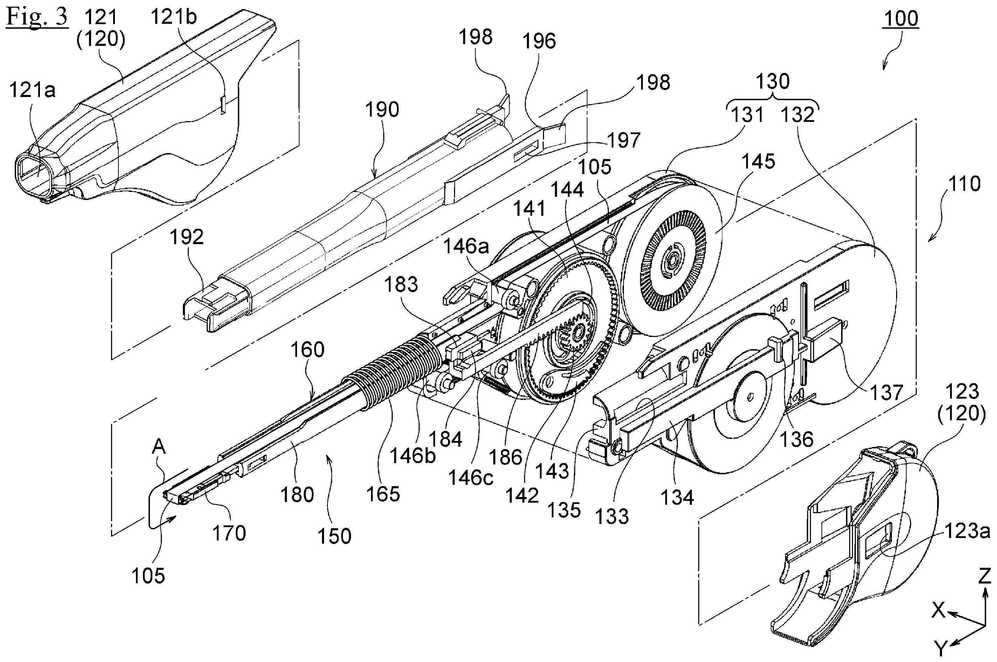

First, an overall configuration of the optical connector cleaning tool 100 in the present embodiment is described with reference to FIG. 2 and FIG. 3. FIG. 2 is a perspective view illustrating the optical connector cleaning tool 100 in the present embodiment, and FIG. 3 is an exploded perspective view of the optical connector cleaning tool 100 in the present embodiment.

The optical connector cleaning tool 100 (hereinafter, simply referred to as the "cleaner 100" as well) in the present embodiment includes a tool body 110 and an extending member 150 that extends from the tool body 110, as illustrated in FIG. 2 and FIG. 3.

The extending member 150 projects forward (in the +Y-direction in the drawing) from an opening 121a of a case 120 of the tool body 110. The extending member 150 has a pressing surface 171a (described below) that presses a cleaning element 105 against the connection end surface 12 of the optical connector 10 at the front end. The tool body 110 includes bobbins 141, 145 (described below) that supply the cleaning element 105 to the pressing surface 171a and collect the cleaning element 105. The extending member 150 is relatively movable with respect to the tool body 110 in an axial direction of the extending member 150 (in the Y-axis direction in the drawing).

The cleaning element 105 moves on the pressing surface 171a in association with this relative movement between the tool body 110 and the extending member 150 (operation of the tool body 110 moving forward with respect to the extending member 150), which causes the cleaning element 105 to slide while being pressed against the connection end surface 12 of the optical connector 10, and thus, a foreign matter adhered to the connection end surface 12 can be effectively wiped off. In addition, in association with this relative movement (operation of the tool body 110 retreating with respect to the extending member 150), the used cleaning element 105 can be collected around the winding bobbin 141 from the pressing surface 171a, and the unused cleaning element 105 can be supplied to the pressing surface 171a from the feeding bobbin 145.

As described above, the optical connector 10 as the cleaning target in the present embodiment is a multi-fiber collective connection type optical connector, and the connection end surface 12 of the ferrule 11 of the optical connector 10 has a flat shape. Therefore, the cleaning element 105 is an elongated strip-shaped continuous body (tape). The cleaning element 105 has a width that is large enough to wipe end surfaces of all the optical fibers 13 exposed on the connection end surface 12 of the ferrule 11 and their peripheral areas (for example, a region between the guide pins 17) at once. While the cleaning element 105 is not particularly limited, as one example of such a tape-shaped cleaning element 105, a woven fabric of ultrafine fibers made of, for example, polyester or nylon can be exemplified.

Next, a configuration of the tool body 110 of the cleaner 100 in the present embodiment will be described in detail with reference to FIG. 3.

The tool body 110 includes the case 120, a housing 130, the winding bobbin 141, a pinion gear 142, a ratchet mechanism 143, a friction transmission mechanism 144, and the feeding bobbin 145, as illustrated in FIG. 3. The case 120 corresponds to an example of "case" in the aspect of the present invention.

The housing 130 includes a first housing 131 and a second housing 132. The housing 130 internally houses the winding bobbin 141, the pinion gear 142, the ratchet mechanism 143, the friction transmission mechanism 144, and the feeding bobbin 145. While not particularly limited, the first and second housings 131, 132 are made of a resin material. A fixing pin formed in the second housing 132 is fitted in a fixing pipe formed in the first housing 131, and thus, the first housing 131 and the second housing 132 are fixed.

The winding bobbin 141 is a reel (a cylindrical winding frame) for winding up the used cleaning element 105. The winding bobbin 141 is rotatably supported on a support shaft portion of the first housing 131. The winding bobbin 141 rotates in association with the above-described retreating operation of the tool body 110 with respect to the extending member 150, and thus, the used cleaning element 105 used on the pressing surface 171a is wound up onto the winding bobbin 141.

The pinion gear 142 is rotatably supported on the above-described support shaft portion of the first housing 131 that supports the winding bobbin 141. That is, the pinion gear 142 is rotatably supported coaxially with the winding bobbin 141 by the first housing 131. The pinion gear 142 engages with a rack gear 186 (described below) of the extending member 150, and the pinion gear 142 and the rack gear 186 constitute a rack and pinion mechanism. The rack and pinion mechanism converts a relative linear motion of the extending member 150 with respect to the above-described tool body 110 into a rotational motion.

The ratchet mechanism 143 permits the winding bobbin 141 to rotate in one direction (a direction in which the winding bobbin 141 winds up the cleaning element 105), and the ratchet mechanism 143 inhibits the winding bobbin 141 from rotating in the other direction. The friction transmission mechanism 144 transmits power by means of friction between the winding bobbin 141 and the pinion gear 142. The friction transmission mechanism 144 restricts the force transmitted between the winding bobbin 141 and the pinion gear 142 to a predetermined value or less.

The feeding bobbin 145 is a reel for supplying the cleaning element 105. The unused cleaning element 105 is wound around the feeding bobbin 145. The feeding bobbin 145 is rotatably supported on the support shaft portion of the first housing 131. In association with the above-described retreating operation of the tool body 110 with respect to the extending member 150, the unused cleaning element 105 is extracted from the feeding bobbin 145 to the pressing surface 171a.

Guide cylinders 146a to 146c are disposed within the housing 130. The guide cylinder 146a guides the unused cleaning element 105 to be supplied to the pressing surface 171a of the extending member 150 from the feeding bobbin 145. On the other hand, the guide cylinders 146b, 146c guide the used cleaning element 105 to be collected around the winding bobbin 141 from the pressing surface 171a of the extending member 150.

The case 120 includes a front case 121 and a rear case 123. The above-described housing 130 is covered with the case 120 in a state in which the housing 130 houses the winding bobbin 141, the pinion gear 142, the ratchet mechanism 143, the friction transmission mechanism 144, and the feeding bobbin 145. The extending member 150 projects forward (in the +Y-direction in the drawing) from the opening 121a of the front case 121. A protrusion 136 of the housing 130 engages with a hole portion 121b of the front case 121, and thus, the front case 121 is fixed to the housing 130. Similarly, a protrusion 137 of the housing 130 engages with a hole portion 123a of the rear case 123, and thus, the front case 121 is fixed to the housing 130. An operator who cleans the optical connector 10 with the cleaner 100 grips the case 120 with a hand 300 (see FIG. 2) to operate the cleaner 100. Accordingly, the case 120 corresponds to an example of the "holding portion" in the aspect of the present invention.

In the present embodiment, the front case 121 and the rear case 123 are made of a material having electrical conductivity. While the material is not particularly limited, as a specific example of the electrically conductive material of which the front case 121 and the rear case 123 are made, an electrically conductive resin material in which a conductive filler is dispersed in a resin material can be exemplified. That is, the case 120 is a resin molded product having electrical conductivity. It is possible to stably ensure conductivity against abrasion and to reduce the weight by making the case 120 of the conductive resin material.

While the conductive filler is not particularly limited, as a specific example of the above-described conductive filler, for example, a carbon-based filler or a metal-based filler is usable. As specific examples of the carbon-based filler, carbon black, graphite, a carbon fiber, a carbon nanotube, graphene, and the like can be exemplified. On the other hand, as specific examples of the metal-based filler, silver, copper, nickel, tin, aluminum, stainless steel, and the like can be exemplified. As specific shapes of the metal-based filler, a spherical shape, an ellipsoidal shape, a granular shape, a fibrous shape, a flake shape, a dendritic shape, and the like can be exemplified. Alternatively, a filler including carbon and metal (for example, a nickel-coated carbon fiber) or a filler including a plurality of kinds of metals (for example, a silver-plated aluminum powder) may be used as a conductive filler. While the resin material is not particularly limited, as the above-described resin materials, for example, polyethylene (PE), polyacetal (POM), ABS resin, polycarbonate (PC), and polypropylene (PP) can be exemplified.

The front case 121 and the rear case 123 may be a resin molded product having a surface on which a metal plating layer is formed. Alternatively, the front case 121 and the rear case 123 may be made of a metal material.

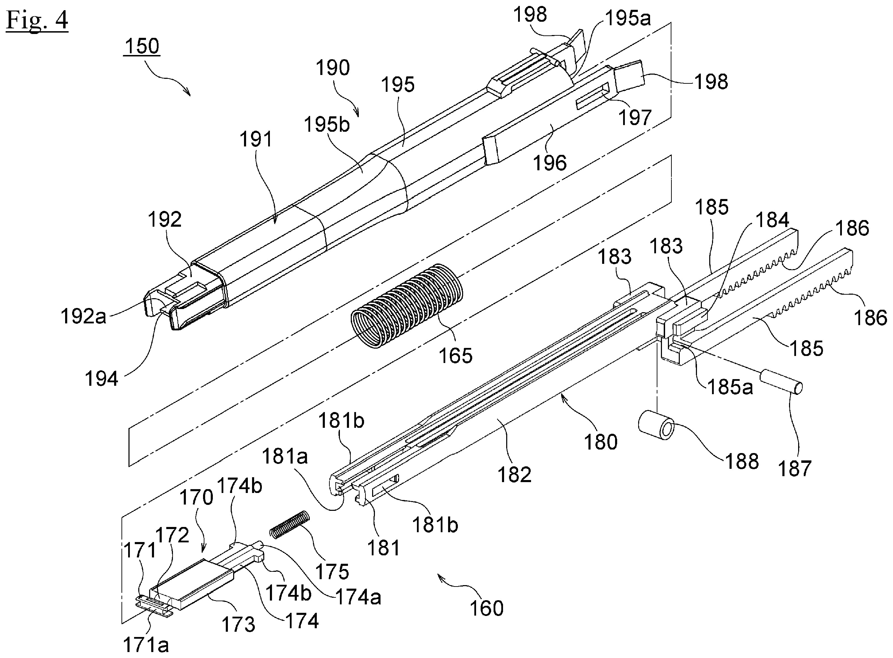

Next, a configuration of the extending member 150 of the cleaner 100 in the present embodiment will be described in detail with reference to FIG. 4 and FIG. 5. FIG. 4 is an exploded perspective view of the extending member 150 in the present embodiment. FIG. 5 is a drawing illustrating a conductive path 101 of the optical connector cleaning tool 100 in the present embodiment and is a cross-sectional view taken along the line V-V in FIG. 2.

The extending member 150 includes a cleaning shaft 160, a first coil spring 165, and a guide nozzle 190, as illustrated in FIG. 4. The cleaning shaft 160 corresponds to an example of "cleaning shaft" in the aspect of the present invention, and the guide nozzle 190 corresponds to an example of "tubular member" in the aspect of the present invention.

The cleaning shaft 160 is a member (pressing member) for pressing the cleaning element 105 against the connection end surface 12 of the optical connector 10. The cleaning shaft 160 is a long member that extends in a longitudinal-axis direction (the Y-axis direction in the drawing) of the extending member 150 and includes a cleaning head (head member) 170, a second coil spring 175, and a rack shaft (supporting member) 180.

The cleaning head 170 is a member that constitutes a front end portion of the cleaning shaft 160. The cleaning head 170 includes a pressing portion 171, a neck portion (tilting portion) 172, a supporting portion 173, and an insertion portion 174. While not particularly limited, the cleaning head 170 is made of a resin material, and the pressing portion 171, the neck portion 172, the supporting portion 173, and the insertion portion 174 are integrally formed.

The pressing portion 171 has the pressing surface 171a that presses the cleaning element 105 against the connection end surface of the optical connector 10 at the front end of the pressing portion 171. The cleaning element 105 supplied from the feeding bobbin 145 and collected around the winding bobbin 141 is held by the cleaning shaft 160 so that the cleaning element 105 is turned back on the pressing surface 171a. The cleaning element 105 supplied from the feeding bobbin 145 to the pressing surface 171a moves downward (in the -Z-direction in the drawing) on the pressing surface 171a (see the arrow A in FIG. 3). The pressing portion 171 is connected to the supporting portion 173 via the neck portion 172, and the insertion portion 174 is connected to a rear end side of the supporting portion 173.

The insertion portion 174 is a portion inserted into a front end portion 181 of the rack shaft 180 and has a plate shape having a width narrower than that of the supporting portion 173. A column-shaped shaft portion 174a and protrusions 174b are formed at the rear end of the insertion portion 174, the column-shaped shaft portion 174a projects rearward (in the -Y-direction in the drawing), and the protrusions 174b project toward sides (in the X-axis direction in the drawing).

As illustrated in FIG. 4 and FIG. 5, the second coil spring 175 is interposed between the cleaning head 170 and the rack shaft 180 with the shaft portion 174a of the cleaning head 170 being inserted into the second coil spring 175. The second coil spring 175 biases the cleaning head 170 forward with respect to the rack shaft 180. This allows the pressing surface 171a of the cleaning head 170 to press the cleaning element 105 against the connection end surface 12 of the optical connector 10 with an appropriate pressing force.

The rack shaft 180 is a member that supports the cleaning head 170 movably in a front-rear direction (the Y-axis direction in the drawing). The rack shaft 180 includes the front end portion 181, a trunk portion 182, shoulder portions 183, and arm portions 185, as illustrated in FIG. 4. While not particularly limited, for example, the rack shaft 180 is made of a resin material, and the front end portion 181, the trunk portion 182, the shoulder portions 183, and the arm portions 185 are integrally formed.

At the front end portion 181 of the rack shaft 180, insertion grooves 181a and windows 181b are formed. The insertion groove 181a is a groove that opens at the front end of the rack shaft 180. The insertion portion 174 of the cleaning head 170 is inserted into the insertion grooves 181a movably in the front-rear direction (the Y-axis direction in the drawing). The windows 181b open on side surfaces of the front end portion 181 from the insertion grooves 181a. The protrusions 174b of the insertion portion 174 of the cleaning head 170 are inserted into the windows 181b. The cleaning head 170 is guided in the front-rear direction by the insertion grooves 181a, and the windows 181b prevent the cleaning head 170 biased by the second coil spring 175 from falling off forward (in the +Y-direction in the drawing). Here, the Y-axis direction in the drawing is an insertion and removal direction of the cleaner 100 with respect to the adapter 15 during cleaning, also a relative movement direction of the extending member 150 with respect to the case 120, also an axial direction (longitudinal direction) of the cleaning shaft 160, and also a pressing direction of the cleaning head 170 pressing the pressing surface 171a via the cleaning element 105.

The trunk portion 182 is connected to a rear side of the front end portion 181. The trunk portion 182 has a pillar shape and is a long portion that extends in the axial direction (Y-axis direction in the drawing) of the extending member 150. While the rear side portion of the trunk portion 182 is arranged within the housing 130 of the tool body 110, the other portion of the trunk portion 182 extends forward (in the +Y-direction in the drawing) from the housing 130. The trunk portion 182 has upper and lower surfaces that function as guide surfaces that guide the cleaning element 105 supplied to the pressing surface 171a of the cleaning head 170 and collected from the pressing surface 171a.

A pair of the shoulder portions 183 of the rack shaft 180 are connected to a rear end of the trunk portion 182 of the rack shaft 180. The respective shoulder portions 183 project toward sides (in the X-axis direction in the drawing) from the rear end of the trunk portion 182 and are arranged in windows 133 (see FIG. 3) of the first and second housings 131, 132.

Protrusions 184 that project toward the sides (in the X-axis direction in the drawing) are formed on the shoulder portions 183. In a state in which the shoulder portions 183 are arranged in the windows 133 of the housings 131, 132, the protrusions 184 project from the windows 133 and are engaged with windows 197 (described below) of the guide nozzle 190.

A pair of the arm portions 185 are connected to lower sides of the shoulder portions 183 and extend rearward (in the -Y-direction in the drawing) from the shoulder portions 183. The arm portions 185 are housed in respective housing portions 134 (see FIG. 3) of the first and second housings 131, 132.

Holding holes 185a are formed at the front end portions of the pair of arm portions 185. A pin 187 is inserted into the holding holes 185a, and the pin 187 rotatably supports a roll 188. The used cleaning element 105 guided along a lower surface of the trunk portion 182 is guided toward the winding bobbin 141 by the roll 188 and the above-described guide cylinders 146b, 146c of the tool body 110. The cleaning element 105 is turned back around the roll 188, also turned back around the guide cylinder 146b, and guided toward the winding bobbin 141 in the order of the roll 188, the guide cylinder 146b, and the guide cylinder 146c.

The rack gears 186 are formed at the rear side potions of the arm portions 185. The above-described pinion gear 142 engages with the rack gear 186, and thus, the rack and pinion mechanism is constituted.

The guide nozzle 190 is a pipe-shaped member including a tubular portion 191, a pair of plate portions 196, and a pair of leaf spring portions 198. The guide nozzle 190 has a rear end portion (base end portion) housed within the case 120. Specifically, a rear end side portion of a main body portion 195 (described below) of the tubular portion 191, the plate portions 196, and the leaf spring portions 198 of the guide nozzle 190 are housed within the above-described case 120. On the other hand, a front end side portion of the main body portion 195 and a front end portion 192 (described below) of the tubular portion 191 of the guide nozzle 190 project forward (in the +Y-direction in the drawing) from the opening 121a of the case 120.

In the present embodiment, the guide nozzle 190 is made of a material having electrical conductivity. While the material is not particularly limited, as a specific example of the electrically conductive material of which the guide nozzle 190 is made, for example, an electrically conductive resin material can be exemplified. As specific examples of the electrically conductive resin material, similar ones to those listed as the specific examples of the electrically conductive resin material of which the above-described case 120 is made can be exemplified. That is, the guide nozzle 190 is a resin molded product having electrical conductivity. It is possible to stably ensure conductivity against abrasion and reduce the weight by making the guide nozzle 190 of the conductive resin material. The tubular portion 191, the plate portions 196, and the leaf spring portions 198 of the guide nozzle 190 are integrally formed. The guide nozzle 190 may be a resin molded product having a surface on which a metal plating layer is formed. Alternatively, the guide nozzle 190 may be made of a metal material.

The tubular portion 191 includes the front end portion 192 inserted into the adapter 15 when the optical connector 10 is cleaned, and the main body portion 195 connected to a rear side of the front end portion 192. The tubular portion 191 has an inner hole that passes through in the axial direction (Y-axis direction in the drawing), and the cleaning shaft 160 and the first coil spring 165 are housed within the inner hole.

As illustrated in FIG. 2 and FIG. 3, the inner hole of the front end portion 192 of the tubular portion 191 houses the supporting portion 173 of the cleaning head 170. The pressing portion 171 of the cleaning head 170 connected to the supporting portion 173 via the neck portion 172 projects forward (in the +Y-direction in the drawing) from an opening 192a of the inner hole of the front end portion 192 of the tubular portion 191. In contrast to this, the shoulder portions 183 and the arm portions 185 of the rack shaft 180 project rearward (in the -Y-direction in the drawing) from an opening 195a (see FIG. 4) at a rear side of the main body portion 195 of the tubular portion 191 of the guide nozzle 190.

As illustrated in FIG. 4, the main body portion 195 of the tubular portion 191 of the guide nozzle 190 has, at its central portion, a tapered portion 195b whose inner diameter increases. The first coil spring 165 is interposed between the tapered portion 195b and a front surface 135 (see FIG. 3) of the housing 130. The first coil spring 165 biases the guide nozzle 190 in a direction away from the tool body 110 (in the +Y-direction in the drawing).

The pair of plate portions 196 project toward sides (in the X-axis direction in the drawing) from the rear end of the main body portion 195. The respective plate portions 196 extend in the longitudinal direction (Y-direction in the drawing) of the guide nozzle 190, and the pair of plate portions 196 extend in parallel. Each of the plate portions 196 has a window 197 formed thereon. The protrusion 184 of the rack shaft 180 projecting from the housing 130 is fitted in the window 197, and thus, the rack shaft 180 and the guide nozzle 190 are fixed to each other.

In the present embodiment, the leaf spring portions 198 further extend rearward (in the -Y-direction in the drawing) from the rear ends of the respective plate portions 196. Each of the leaf spring portions 198 extends to be inclined with respect to the longitudinal direction of the guide nozzle 190 (the Y-direction in the drawing). The pair of leaf spring portions 198 are opposed to each other at intervals and are mutually inclined toward the opposite sides. The pair of leaf spring portions 198 extend to separate from each other as closer the rear end of the guide nozzle 190, and the interval between the pair of leaf spring portions 198 expands as closer the rear end of the guide nozzle 190.

As illustrated in FIG. 5, the pair of leaf spring portions 198 are arranged in the case 120 in a state of being elastically deformed. Each of the leaf spring portions 198 is interposed between the case 120 and the housing 130. The pair of leaf spring portions 198 are in contact with an inner surface 121c of the front case 121, and the leaf spring portions 198 press the case 120 outward. The leaf spring portion 198 corresponds to an example of "first leaf spring" in the aspect of the present invention. The inner surface 121c corresponds to an example of "inner surface" in the aspect of the present invention, and "outward" in the present case is a direction toward the case 120 from the guide nozzle 190. The guide nozzle 190 may include an elastic body other than a leaf spring instead of the leaf spring portion 198, and this elastic body may be in contact with the case 120 and may press the case 120.

Here, in a cleaner of a comparative example in which the guide nozzle does not include the above-described leaf spring portions 198, a relatively large clearance is ensured between the guide nozzle and the case in order to permit the relative movement of the guide nozzle with respect to the case. Therefore, an electrical contact resistance between the guide nozzle and the case is high, and it is difficult to stably form a conductive path therebetween.

In contrast to this, in the present embodiment, the guide nozzle 190 and the case 120 have electrical conductivity, and the guide nozzle 190 and the case 120 are reliably in contact by means of the above-described leaf spring portions 198. Therefore, the guide nozzle 190 and the case 120 are electrically connected in a stable manner via the leaf spring portions 198, and the guide nozzle 190 and the case 120 are stably and electrically conducted with each other. That is, the electrically conductive path 101 leading from the guide nozzle 190 to the case 120 as illustrated in FIG. 5 is stably formed. In the present embodiment, "electrically connected" means that an electrical resistance value R between members in mutual contact is 1.0 × 10³ [Ω] or more and 1.0 × 10⁸ [Ω] or less (1.0 × 10³ [Ω] ≤ R ≤ 1.0 × 10⁸ [Ω]).

A pressing force Fₐ₁ of the leaf spring portion 198 of the guide nozzle 190 against the case 120 preferably satisfies Formula (2) below. When the pressing force Fₐ₁ is less than 0.5 N, the electrical connection between the guide nozzle 190 and the case 120 becomes unstable in some cases. On the other hand, when the pressing force Fₐ₁ exceeds 12 N, the contact between the guide nozzle 190 and the case 120 is excessively strong, and therefore, they may become difficult to slide, or they may be abraded in association with sliding and generate dust.$0.5 \left[N\right] < {F}_{a 1} < 12 \left[N\right]$ (2)

Cleaning of the optical connector 10 using the cleaner 100 described above is performed in the following manner.

First, an operator inserts a front end portion of the extending member 150 of the cleaner 100 into the insertion port 16 of the adapter 15. Thus, the pressing surface 171a of the cleaning head 170 presses the cleaning element 105 against the connection end surface 12 of the ferrule 11. Next, when the operator pushes the tool body 110 against the extending member 150, the first coil spring 165 contracts, and the interval between the roll 188 of the extending member 150 and the guide cylinder 146b of the tool body 110 increases by a predetermined length.

Therefore, while the length of the cleaning element 105 between the supply side guide cylinder 146a and the roll 188 reduces by the predetermined length, the length of the cleaning element 105 between the guide cylinder 146b and the roll 188 increases by the predetermined length. As a result, the cleaning element 105 on the pressing surface 171a is pulled toward the side of the winding bobbin 141 (the collection side), and the cleaning element 105 slides while being pressed against the connection end surface 12 of the ferrule 11 to wipe off a foreign matter adhered to the connection end surface 12.

At this time, the case 120 slides with respect to the guide nozzle 190, and therefore, static electricity is generated therebetween in some cases. In contrast to this, in the present embodiment, as illustrated in FIG. 5, the leaf spring portions 198 of the guide nozzle 190 press the inner surface 121c of the case 120, and the electrically conductive path 101 leading from the guide nozzle 190 to the case 120 is formed. Accordingly, the static electricity generated in the guide nozzle 190 by the sliding flows to the case 120 via the conductive path 101. The hand 300 of the operator grips the case 120, and therefore, the static electricity can be released from the cleaner 100 to the human body of the operator. A ground wire may be connected to the case 120, and the case 120 may be grounded via the ground wire.

The above-described pushing of the tool body 110 by the operator causes the rack gear 186 to rotate the pinion gear 142. The ratchet mechanism 143 and the friction transmission mechanism 144, however, cause the pinion gear 142 to rotate idly, and therefore, the winding bobbin 141 does not rotate.

Next, when the operator releases the pushing of the tool body 110 against the extending member 150, the tool body 110 retreats with respect to the extending member 150 by the elastic force of the first coil spring 165 to reduce the distance between the roll 188 of the extending member 150 and the guide cylinder 146b of the tool body 110 by the predetermined length, and simultaneously the rack gear 186 rotates the pinion gear 142. The rotation force of the pinion gear 142 is transmitted to the winding bobbin 141 via the friction transmission mechanism 144 to rotate the winding bobbin 141, and the used cleaning element 105 is wound up around the winding bobbin 141.

Simultaneously with this, the length of the cleaning element 105 between the supply side guide cylinder 146a and the roll 188 increases by the predetermined length. At this time, the distance between the pressing surface 171a of the cleaning head 170 and the roll 188 is constant, and the cleaning element 105 is hung on the pressing surface 171a of the cleaning head 170, and therefore, the unused cleaning element 105 having a length corresponding to the predetermined length is fed out of the feeding bobbin 145.

After completing cleaning, the operator pulls the extending member 150 out of the insertion port 16 of the adapter 15 to remove the cleaner 100 from the adapter 15.

As described above, in the present embodiment, the guide nozzle 190 and the case 120 have electrical conductivity, the guide nozzle 190 includes the leaf spring portions 198 that are in contact with the case 120 and press the case 120, and the guide nozzle 190 and the case 120 are electrically connected via the leaf spring portions 198. Therefore, the static electricity generated in the guide nozzle 190 by sliding with the case 120 is allowed to be promptly dissipated via the case 120.

In particular, in an ESD Protected Area (EPA) for, for example, the manufacturing process of an electrically-sensitive electronic component, Electro-Static Discharge (ESD) needs to be promptly dissipated in order to prevent damage to the electronic component caused by the static electricity. In contrast to this, the optical connector cleaning tool 100 of the present embodiment can promptly dissipate the static electricity generated in the guide nozzle 190 by sliding with the case 120, as described above, and therefore can be used in the ESD protected area.

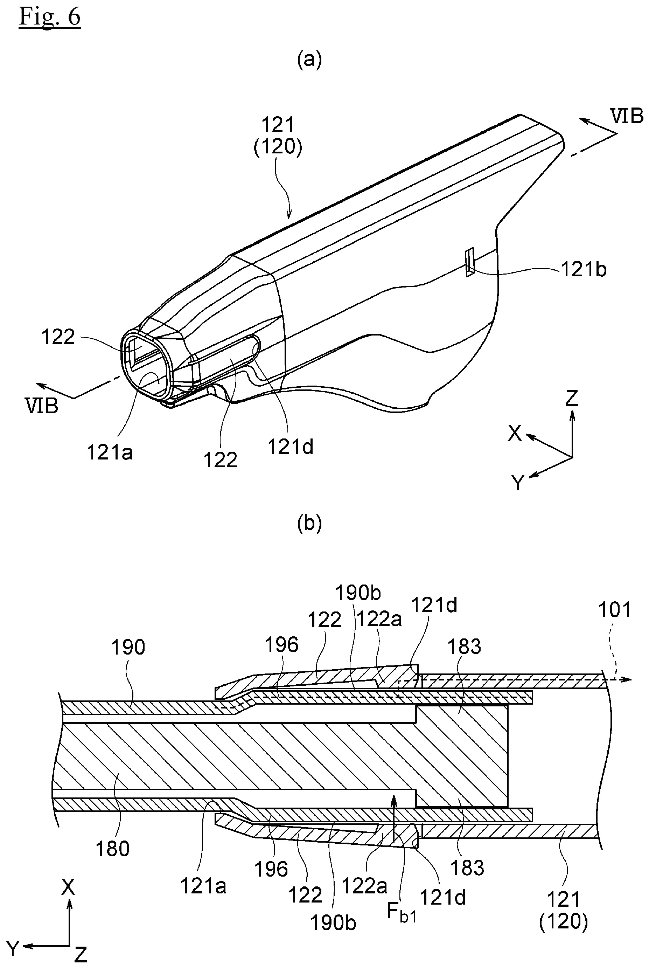

As illustrated in FIG. 6(a) and FIG. 6(b), leaf springs 122 may be disposed at a front end portion of the front case 121. FIG. 6(a) is a perspective view illustrating a modification of the case 120 in the present embodiment, and FIG. 6(b) is a cross-sectional view of the optical connector cleaning tool 100 taken along VIB-VIB in FIG. 6(a).

As illustrated in FIG. 6(a) and FIG. 6(b), a pair of the leaf springs 122 are disposed on the side surfaces of the front case 121 so as to be mutually opposed. Approximately U-shaped slits 121d are formed in the peripheral areas of the leaf springs 122 in the front case 121, and the leaf springs 122 are elastically deformable. Each of the leaf springs 122 has a protrusion 122a that projects inward at the front end. The pair of leaf springs 122 are mutually opposed at intervals, and the guide nozzle 190 is interposed between the protrusions 122a of the pair of leaf springs 122.

The protrusions 122a of the pair of leaf springs 122 are in contact with an outer surface 190b of the guide nozzle 190, and the leaf springs 122 inwardly press the guide nozzle 190. Accordingly, the case 120 and the guide nozzle 190 are reliably in contact by means of the leaf springs 122, and therefore, the case 120 and the guide nozzle 190 are electrically connected in a stable manner via the leaf springs 122, and the case 120 and the guide nozzle 190 are stably and electrically conduct with each other. That is, as illustrated in FIG. 6(b), the electrically conductive path 101 leading from the guide nozzle 190 to the case 120 via the leaf springs 122 is stably formed. The leaf spring 122 corresponds to an example of "second leaf spring" in the aspect of the present invention. The outer surface 190b corresponds to an example of "outer surface" in the aspect of the present invention, and "inward" in the present case is a direction toward the guide nozzle 190 from the case 120.

As illustrated in FIG. 6(b), when the case 120 includes the leaf springs 122, the guide nozzle 190 does not need to include the leaf spring portions 198. The case 120 may include an elastic body other than a leaf spring instead of the leaf spring 122, and this elastic body may be in contact with the guide nozzle 190 and press the guide nozzle 190.

### <<Second Embodiment>>

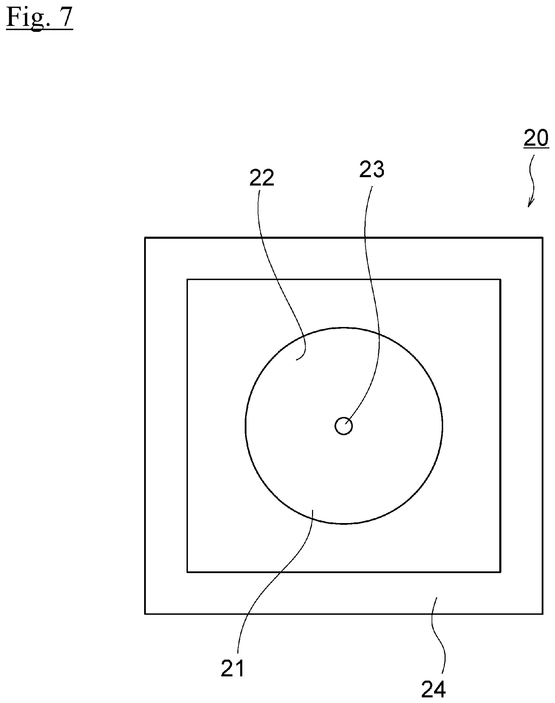

An optical connector 20 as a cleaning target of an optical connector cleaning tool 200 in a second embodiment of the present invention is a single-fiber connection type optical connector plug. FIG. 7 is a front view illustrating the single-fiber connection type optical connector 20 as the cleaning target of the optical connector cleaning tool 200 in the present embodiment.

The optical connector 20 includes a ferrule 21 having a columnar shape, and a housing 24 that internally stores the ferrule 21, as illustrated in FIG. 7. The ferrule 21 has one fiber holding hole that passes through the ferrule 21 in its longitudinal direction. An optical fiber 23 is inserted into the fiber holding hole, and the optical fiber 23 is fixed to the ferrule 21 with an adhesive agent or the like. The optical fiber 23 is exposed from a connection end surface 22 in a circular shape of the ferrule 21.

While the optical connector 20 is not particularly limited, as specific examples of such an optical connector 20, for example, a single-fiber optical connector such as a SC (Single-fiber Coupling) connector specified in JIS C 5973, a FC (Fiber Connector) specified in JIS C 5970, a MU (Miniature Universal) connector specified in JIS C 5983, and a LC (Lucent Connector) can be exemplified.

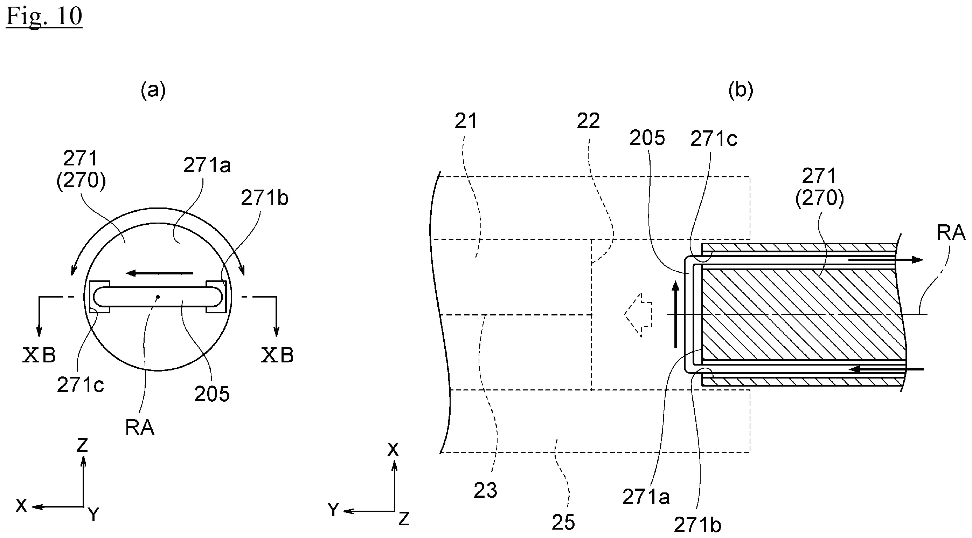

When a pair of the optical connectors 20 each including the above-described ferrule 21 are connected, an adapter is used. Specifically, the pair of optical connectors 20 are inserted from openings on both sides of the adapter, and the ferrules 21 are inserted into respective openings on both sides of a sleeve 25 (see FIG. 10(b)) included in the adapter. The connection end surfaces 22 of the pair of ferrules 21 are butted against each other in the sleeve 25, and thus, the optical fibers 23 exposed from the respective connection end surfaces 22 of the ferrules 21 are optically connected. Before the optical connectors 20 are connected to each other, the connection end surface 22 of the ferrule 21 is cleaned using the optical connector cleaning tool 200 described below in order to remove a foreign matter adhered to the connection end surface 22 of the ferrule 21.

Similarly to the first embodiment, the connection end surface of the ferrule of an optical connector receptacle used in a plug-receptacle coupling system may be cleaned using the optical connector cleaning tool 200 described below. Alternatively, an optical connector plug may be inserted into a cap attached to a front end of the optical connector cleaning tool 200 to clean the connection end surface of the optical connector plug alone in a state where the optical connector plug is not inserted into the adapter.

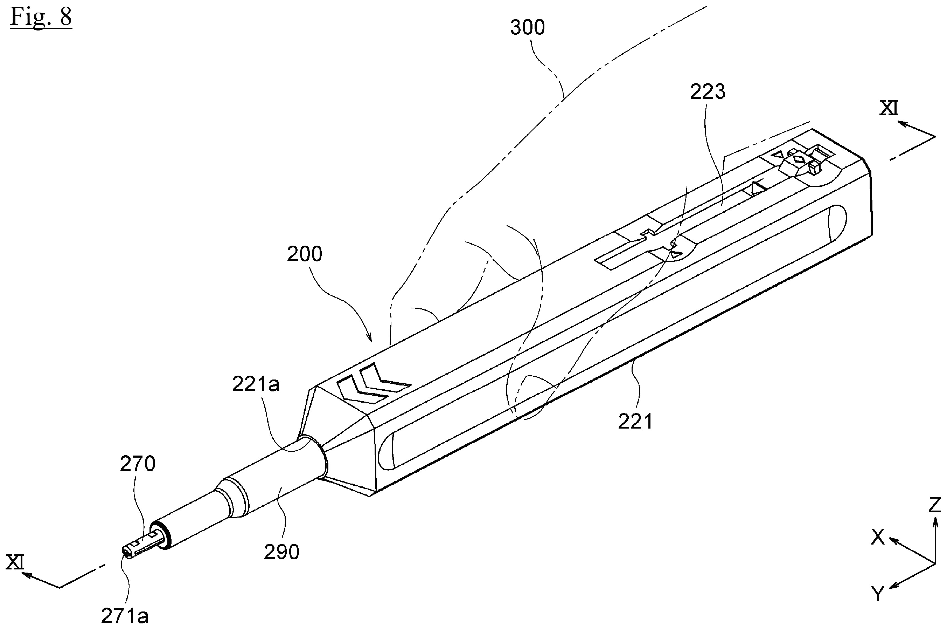

The following describes a configuration of the optical connector cleaning tool 200 in the present embodiment in detail with reference to FIG. 8 to FIG. 11.

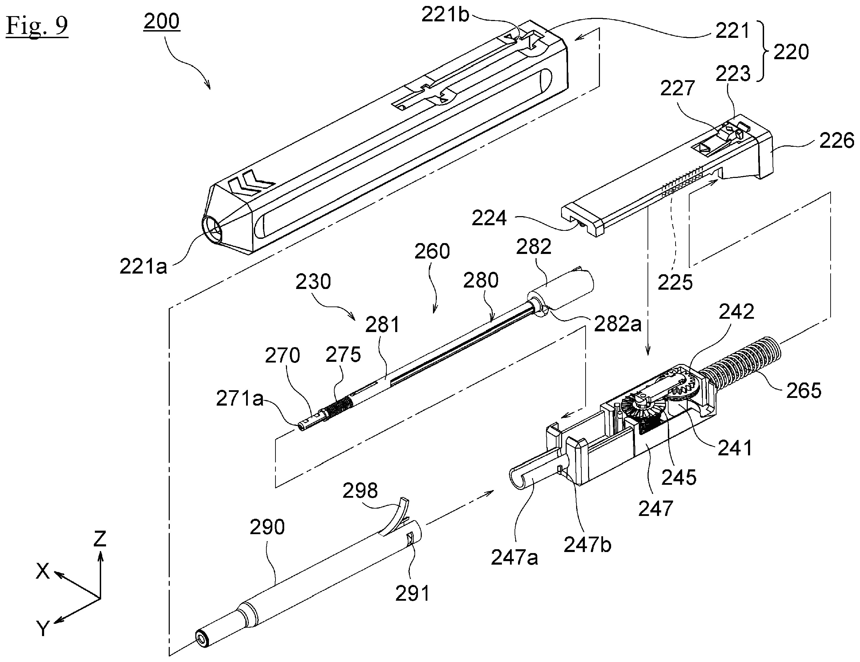

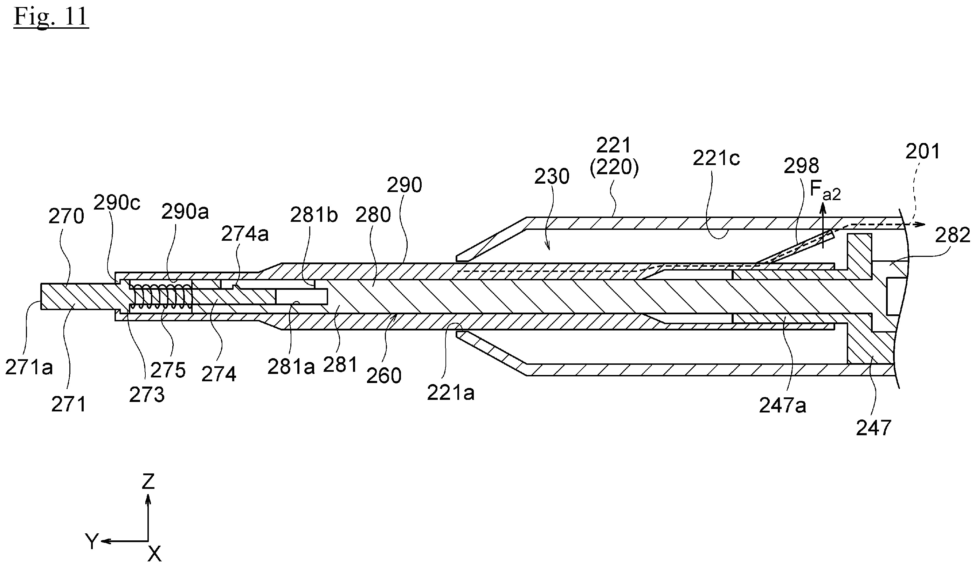

FIG. 8 is a perspective view illustrating the optical connector cleaning tool 200 in the present embodiment, and FIG. 9 is an exploded perspective view of the optical connector cleaning tool 200 in the present embodiment. FIG. 10(a) is a front view illustrating a front end portion of a cleaning head 270 in the present embodiment, and FIG. 10(b) is a cross-sectional view taken along the line XB-XB in FIG. 10(a). FIG. 11 is a drawing illustrating a conductive path 201 of the optical connector cleaning tool 200 in the present embodiment and is a cross-sectional view taken along the line XI-XI in FIG. 8.

The optical connector cleaning tool 200 (hereinafter simply referred to as the "cleaner 200") in the present embodiment includes a case 220, a cleaning unit 230, and a first coil spring 265, as illustrated in FIG. 8 and FIG. 9.

The cleaning unit 230 is housed in the case 220 such that the cleaning unit 230 is relatively movable with respect to the case 220 in the Y-axis direction in the drawing. The first coil spring 265 is interposed between the cleaning unit 230 and the case 220 and biases the cleaning unit 230 in the +Y-direction in the drawing. The cleaning unit 230 includes a winding bobbin 241, a pinion gear 242, a feeding bobbin 245, a support body 247, a cleaning shaft 260, and a guide nozzle 290. The cleaner 200 cleans the optical connector 20 by pressing a cleaning element 205 (see FIG. 10(a) and FIG. 10(b)) hung on the cleaning shaft 260 against the connection end surface 22 of the ferrule 21 of the optical connector 20 by means of a pressing surface 271a (described below) of the cleaning shaft 260.

The case 220 corresponds to an example of "case" in the aspect of the present invention, the cleaning shaft 260 corresponds to an example of "cleaning shaft" in the aspect of the present invention, and the guide nozzle 290 corresponds to an example of "tubular member" in the aspect of the present invention.

The cleaning element 205 is a continuous body obtained by processing a cleaning cloth into a thread-like or string-like form. As a specific example of the cleaning cloth, for example, a nonwoven fabric or a woven fabric constituted of ultrafine fibers of, for example, polyester or nylon, can be exemplified. While the cleaning element 205 of the present embodiment has a circular-shape cross section, the shape is not particularly limited to this, and, for example, the cross-sectional shape of the cleaning element 205 may be a polygonal shape. While not particularly limited, the cleaning element 205 has a diameter of 0.1 mm to 1 mm, and preferably has a diameter of 0.2 mm to 0.3 mm. A narrow tape-shaped continuous body formed by processing a cleaning cloth into a strip shape may be used as the cleaning element 205.

The cleaning shaft 260 is a long member for pressing the cleaning element 205 against the connection end surface 22 of the optical connector 20. The cleaning element 205 is held by the cleaning shaft 260 so that the cleaning element 205 is turned back on the pressing surface 271a. The unused cleaning element 205 is wound around the feeding bobbin 245. The unused cleaning element 205 is supplied to the cleaning shaft 260 from the feeding bobbin 245. The cleaning element 205 used on the pressing surface 271a is collected around the winding bobbin 241. The cleaning shaft 260 includes the cleaning head (head member) 270, a second coil spring 275, and a shaft member 280.

The cleaning head 270 is a member constituting a front end portion of the cleaning shaft 260. The cleaning head 270 includes a pressing portion 271, a flange portion 273, and an insertion portion 274, as illustrated in FIG. 11. While not particularly limited, the cleaning head 270 is made of a resin material. The pressing portion 271, the flange portion 273, and the insertion portion 274 of the cleaning head 270 are integrally formed.

As illustrated in FIG. 10(a) and FIG. 10(b), the pressing portion 271 has the pressing surface 271a that presses the cleaning element 205 against the connection end surface 22 of the optical connector 20 at the front end of the pressing portion 271. The pressing surface 271a has a shape corresponding to the shape of the connection end surface 22 of the ferrule 21 of the optical connector 20 as the cleaning target (a circular shape in the present embodiment).

A pair of guide holes 271b, 271c are formed on the pressing surface 271a, and the cleaning element 205 can pass through the inside of the cleaning shaft 260. The unused cleaning element 205 fed out of the feeding bobbin 245 passes through the inside of the cleaning shaft 260 and the guide hole 271b and is supplied to the pressing surface 271a. The cleaning element 205 supplied to the pressing surface 271a passes over the center of the pressing surface 271a and moves on the pressing surface 271a toward the guide hole 271c. The used cleaning element 205 passes through the guide hole 271c and the inside of the cleaning shaft 260 and is wound around the winding bobbin 241. Instead of the above-described guide holes 271b, 271c, a pair of guide grooves may be formed on side surfaces of the cleaning head 270, and the cleaning element 205 may be supplied to the pressing surface 271a and collected from the pressing surface 271a via the guide grooves.

As illustrated in FIG. 11, the flange portion 273 is connected to a rear side of the pressing portion 271. The flange portion 273 has a diameter larger than the diameter of the pressing portion 271 and the diameter of the insertion portion 274. An end portion on a front end side of the second coil spring 275 is in contact with the flange portion 273. When the cleaner is unused (in a state where the cleaning head 270 does not press the connection end surface of the optical connector 200), the flange portion 273 is in contact with an inner projecting portion 290c at a front end of the guide nozzle 290.

The flange portion 273 has a rear side to which the insertion portion 274 is connected. The insertion portion 274 is a portion inserted into a front end portion of the shaft member 280. A protrusion 274a that projects toward a side (in the X-axis direction in the drawing) is formed in a rear end portion of the insertion portion 174.

The shaft member 280 includes a shaft main body 281 and an expanded portion 282, as illustrated in FIG. 9. Both the shaft main body 281 and the expanded portion 282 have columnar shapes, and the expanded portion 282 is connected to a rear end of the shaft main body 281. While not particularly limited, the shaft member 280 is made of, for example, a resin material, and the shaft main body 281 and the expanded portion 282 are integrally formed.

The above-described cleaning head 270 is supported by the shaft main body 281 such that the cleaning head 270 is movable with respect to the shaft main body 281 in the Y-axis direction in the drawing. As illustrated in FIG. 11, an insertion hole 281a and a window 281b are formed in a front end portion of the shaft main body 281. The insertion hole 281a is a hole opened at the front end of the shaft main body 281, and the insertion portion 274 of the cleaning head 270 is inserted into the insertion hole 281a so as to be movable in the front-rear direction (Y-axis direction in the drawing). The window 281b opens to a side surface of the shaft main body 281 from the insertion hole 281a, and the protrusion 274a of the insertion portion 274 is inserted into the window 281b. Here, the Y-axis direction in the drawing is an insertion and removal direction of the cleaner 200 with respect to the adapter during cleaning, also a relative movement direction of the cleaning unit 230 with respect to the case 220, also an axial direction (longitudinal direction) of the cleaning shaft 260, and also a pressing direction in which the cleaning head 270 presses the pressing surface 271a via the cleaning element 205.

The second coil spring 275 is interposed between the flange portion 273 of the cleaning head 270 and the shaft main body 281. The second coil spring 275 biases the cleaning head 270 forward with respect to the shaft main body 281, and the pressing surface 271a of the cleaning head 270 can thus press the cleaning element 205 against the connection end surface 22 of the optical connector 20 with an appropriate pressing force.

As illustrated in FIG. 9, the expanded portion 282 has an outer peripheral surface on which a cam groove 282a in a spiral pattern is formed. The cam groove 282a and a cam pin 224 of the case 220 described below achieve a rotation mechanism that rotates the cleaning shaft 260. The rotation mechanism rotates the cleaning shaft 260 about a rotation axis RA (see FIG. 10(a) and FIG. 10(b)) parallel to the longitudinal direction of the cleaning shaft 260 as the support body 247 relatively moves with respect to the case 220.

The winding bobbin 241 is a reel (a cylindrical winding frame) for winding up the used cleaning element 205. The winding bobbin 241 is rotatably supported on a support shaft portion of the support body 247. As the cleaning unit 230 relatively moves with respect to the case 220, the winding bobbin 241 rotates, and thus, the used cleaning element 205 used on the pressing surface 271a is wound around the winding bobbin 241.

The pinion gear 242 is rotatably supported on the above-described support shaft portion of the support body 247 that supports the winding bobbin 241. That is, the pinion gear 242 is rotatably supported by the support body 247 coaxially with the winding bobbin 241. The pinion gear 242 engages with a rack gear 225 (described below) of the case 220, and the rack gear 225 and the pinion gear 242 constitute a rack and pinion mechanism. The rack and pinion mechanism converts a relative linear motion of the cleaning unit 230 with respect to the case 220 into a rotational motion, and the pinion gear 242 rotates the winding bobbin 241.

Although not particularly illustrated, the cleaning unit 230 includes a rotation restriction mechanism that permits the winding bobbin 241 to rotate in one direction (a direction in which the winding bobbin 241 winds up the cleaning element 205), but inhibits the winding bobbin 241 from rotating in the other direction. Although not particularly illustrated, the cleaning unit 230 includes a transmission mechanism that transmits only one-direction rotation to the winding bobbin 241 from the pinion gear 242.

The feeding bobbin 245 is a reel for supplying the cleaning element 205. The unused cleaning element 205 is wound around the feeding bobbin 245. The feeding bobbin 245 is rotatably supported on the support shaft portion of the support body 247. As the cleaning unit 230 relatively moves with respect to the case 220, the unused cleaning element 205 is extracted to the pressing surface 271a from the feeding bobbin 245.

The support body 247 is a member that supports the cleaning shaft 260, the winding bobbin 241, the pinion gear 242, and the feeding bobbin 245 described above. The cleaning shaft 260 is rotatably supported by the support body 247 about the rotation axis RA. Specifically, the expanded portion 282 of the cleaning shaft 260 is rotatably supported by the support body 247, and the shaft main body 281 of the cleaning shaft 260 projects from the support body 247 in the +Y-direction in the drawing.

The guide nozzle 290 is a pipe-shaped member arranged on a front end side of the support body 247. In the present embodiment, the guide nozzle 290 is made of a material having electrical conductivity. While the material is not particularly limited, as a specific example of the electrically conductive material of which the guide nozzle 290 is made, for example, an electrically conductive resin material can be exemplified. As specific examples of the electrically conductive resin material, similar ones to those listed as the specific examples of the electrically conductive resin material of which the above-described case 120 is made can be exemplified. That is, the guide nozzle 290 is a resin molded product having electrical conductivity. It is possible to stably ensure conductivity against abrasion and to reduce the weight by making the guide nozzle 290 of the conductive resin material. The guide nozzle 290 may be a resin molded product having a surface on which a metal plating layer is formed. Alternatively, the guide nozzle 290 may be made of a metal material.

In the present embodiment, the guide nozzle 290 includes a leaf spring 298 in a rear end portion (base end portion) of the guide nozzle 290. A pair of slits are formed in the peripheral area of the leaf spring 298 in the rear end portion of the guide nozzle 290, and the leaf spring 298 is elastically deformable. As illustrated in FIG. 11, the leaf spring 298 is disposed within the case 220 in a state of being elastically deformed and is in contact with an inner surface 221c of a case body 221, and the leaf spring 298 presses the case 220 outward. The leaf spring 298 corresponds to an example of "first leaf spring" in the aspect of the present invention. The inner surface 211c corresponds to an example of "inner surface" in the aspect of the present invention, and "outward" in the present case is a direction toward the case 220 from the guide nozzle 290. The guide nozzle 290 may include an elastic body other than a leaf spring instead of the leaf spring 298, and the elastic body may be in contact with the case 220 and press the case 220.

In the present embodiment, the guide nozzle 290 and the case 220 have electrical conductivity, and the guide nozzle 290 is reliably in contact with the case 220 by means of the above-described leaf spring 298. Therefore, the guide nozzle 290 and the case 220 are electrically connected in a stable manner via the leaf spring 298, and the guide nozzle 290 and the case 220 are stably and electrically conducted with each other. That is, the electrically conductive path 201 leading from the guide nozzle 290 to the case 220 is stably formed as illustrated in FIG. 11.

A pressing force Fₐ₂ of the leaf spring 298 of the guide nozzle 290 with respect to the case 220 preferably satisfies Formula (3) below. When the pressing force Fₐ₂ is less than 0.5 N, the electrical connection between the guide nozzle 290 and the case 220 becomes unstable in some cases. On the other hand, when the pressing force Fₐ₂ exceeds 12 N, the contact between the guide nozzle 290 and the case 220 is excessively strong, and therefore, they may become difficult to slide, or they may be abraded in association with sliding and generate dust.$0.5 \left[N\right] < {F}_{a 2} < 12 \left[N\right]$ (3)

As illustrated in FIG. 9, the rear end portion of the guide nozzle 290 has an outer peripheral surface on which a window 291 is formed. On the other hand, the above-described support body 247 includes a tubular portion 247a that projects in the +Y-direction in the drawing from a wall on a front end side (+Y-direction side in the drawing) of the support body 247, and a protrusion 247b is formed on an outer peripheral surface of the tubular portion 247a. The protrusion 247b is inserted into the window 291, and thus, the guide nozzle 290 is fixed to the support body 247.

A portion of the cleaning shaft 260 that projects from the support body 247 is inserted into the guide nozzle 290. The portion projecting from the support body 247 in the cleaning shaft 260 is a portion on a front end side (+Y-direction side in the drawing) with respect to the expanded portion 282 in the cleaning shaft 260 and specifically includes the cleaning head 270, the second coil spring 275, and the shaft main body 281. The flange portion 273 of the cleaning head 270 is in contact with the inner projecting portion 290c (see FIG. 11) at the front end of the guide nozzle 290, and the pressing portion 271 of the cleaning head 270 projects from the front end of the guide nozzle 290.

Although not particularly illustrated, the guide nozzle 290 may have a double structure including two tubular bodies. The double-structure guide nozzle includes a first tubular body, a second tubular body, and a coil spring. The first tubular body is housed in the second tubular body and is relatively movable with respect to the second tubular body in the axial direction. The first tubular body is biased in a direction away from the second tubular body by the coil spring. In a state where the cleaner 200 is not used (state where a front end surface of the guide nozzle 290 does not press an end surface of the sleeve 25), the cleaning head 270 is housed within the first tubular body. In contrast to this, when the optical connector 20 is cleaned with the cleaner 200, the front end of the cleaning shaft 260 projects from the first tubular body.

The case 220 houses a part of the cleaning unit 230 and the first coil spring 265. As illustrated in FIG. 8 and FIG. 9, the case 220 includes the case body 221 and an adjusting member 223. An operator who cleans the optical connector 20 with the cleaner 200 grips the case 220 with the hand 300 to operate the cleaner 200. Accordingly, the case 220 corresponds to an example of "holding portion" in the aspect of the present invention.

In the present embodiment, the case body 221 and the adjusting member 223 are made of a material having electrical conductivity. While the material is not particularly limited, as a specific example of the electrically conductive material of which the case body 221 and the adjusting member 223 are made, for example, an electrically conductive resin material can be exemplified. As specific examples of the electrically conductive resin material, similar ones to those listed as the specific examples of the electrically conductive resin material of which the above-described case 120 is made can be exemplified. That is, the case 220 is a resin molded product having electrical conductivity. It is possible to stably ensure conductivity against abrasion and reduce the weight by making the case 220 of the conductive resin material. The case body 221 and the adjusting member 223 may be a resin molded product having a surface on which a metal plating layer is formed. Alternatively, the case body 221 and the adjusting member 223 may be made of a metal material.

The cleaning unit 230 is inserted into the case body 221 from an opening on a rear end side (-Y-direction side in the drawing) of the case body 221, and a front end portion of the cleaning unit 230 projects from the case body 221 via an opening 221a. The cleaning unit 230 is housed in the case body 221 such that the cleaning unit 230 is relatively movable with respect to the case body 221 in the Y-axis direction in the drawing.

The adjusting member 223 includes the cam pin 224 and the rack gear 225. The adjusting member 223 covers the support body 247 such that the cleaning unit 230 is relatively movable with respect to the adjusting member 223 in the Y-axis direction in the drawing. The cam pin 224 of the adjusting member 223 is inserted into the cam groove 282a of the shaft member 280. Accordingly, when the cleaning unit 230 relatively moves with respect to the case 220, the cleaning shaft 260 rotates about the rotation axis RA by the rotation mechanism constituted of the cam pin 224 and the cam groove 282a. The rack gear 225 of the adjusting member 223 engages with the pinion gear 242. Accordingly, when the cleaning unit 230 relatively moves with respect to the case 220, the winding bobbin 241 rotates by the rack and pinion mechanism constituted of the rack gear 225 and the pinion gear 242.

The first coil spring 265 is interposed between the wall on the front end side (+Y-direction side in the drawing) of the support body 247 and a wall 226 on a rear end side (-Y-direction side in the drawing) of the adjusting member 223. The first coil spring 265 biases the cleaning unit 230 toward the front end side (+Y-direction side in the drawing).

The adjusting member 223 and the first coil spring 265 are inserted into the case body 221 from the opening on the rear end side (-Y-direction side in the drawing) of the case body 221 together with the cleaning unit 230 and is housed within the case body 221. At this time, the adjusting member 223 is fixed to the case body 221 by a locking piece 227 of the adjusting member 223 being locked in a cutout 221b of the case body 221.

Cleaning of the optical connector 20 using the cleaner 200 described above is performed in the following manner.

First, an operator inserts the front end portion of the cleaning unit 230 of the cleaner 200 into an opening of the adapter. Thus, the cleaning shaft 260 is inserted into the sleeve 25 (see FIG. 10(b)) included in the adapter, and the pressing surface 271a of the cleaning head 270 presses the cleaning element 205 against the connection end surface 22 of the optical connector 20. Next, when the operator pushes the case 220 against the cleaning unit 230, the cleaning unit 230 relatively retreats with respect to the case 220, and the first coil spring 265 contracts.

The relative linear motion of the cleaning unit 230 with respect to the case 220 by this pushing operation by the operator is converted into a rotational motion by the rack gear 225 and the pinion gear 242. The rotation of the pinion gear 242 is transmitted to the winding bobbin 241 to rotate the winding bobbin 241, and the cleaning element 205 used on the pressing surface 271a of the cleaning shaft 260 is wound around the winding bobbin 241. In association with this winding operation, a tensile force acts on the cleaning element 205 to rotate the feeding bobbin 245, and therefore, the unused cleaning element 205 is supplied to the pressing surface 271a of the cleaning shaft 260 from the feeding bobbin 245. Furthermore, the above-described pushing operation by the operator causes the cam pin 224 to relatively slide in the cam groove 282a, and thus, the cleaning shaft 260 rotates about the rotation axis RA. Thus, the cleaning element 205 slides while being pressed against the connection end surface 22 of the optical connector 20 to wipe off a foreign matter adhered to the connection end surface 22.

At this time, the case 220 slides with respect to the guide nozzle 290, and therefore, static electricity is generated therebetween in some cases. In contrast to this, in the present embodiment, as illustrated in FIG. 11, the leaf spring 298 of the guide nozzle 290 presses the inner surface 221c of the case 220, and thus, the electrically conductive path 201 leading from the guide nozzle 290 to the case 220 is formed. Accordingly, the static electricity generated in the guide nozzle 290 by this sliding flows to the case 220 via the conductive path 201. The hand 300 of the operator grips the case 220, and therefore, the static electricity can be released from the cleaner 200 to the human body of the operator. A ground wire is connected to the case 220, and the case 220 may be grounded via the ground wire.

Next, when the operator releases the pushing of the case 220 against the guide nozzle 290, the cleaning unit 230 relatively moves forward with respect to the case 220 by the elastic force of the first coil spring 265. At this time, the winding bobbin 241 does not rotate by means of the rotation restriction mechanism and the transmission mechanism which are not particularly illustrated.

After completing cleaning, the operator pulls the front end portion of the cleaning unit 230 of the cleaner 200 out of the opening of the adapter to remove the cleaner 200 from the adapter.

As described above, in the present embodiment, the guide nozzle 290 and the case 220 have electrical conductivity, the guide nozzle 290 includes the leaf spring 298 that is in contact with the case 220 and presses the case 220, and the guide nozzle 290 and the case 220 are electrically connected via the leaf spring portion 298. Therefore, the static electricity generated in the guide nozzle 290 by sliding with the case 220 is allowed to be promptly dissipated via the case 220.

In particular, in an ESD Protected Area (EPA) for, for example, the manufacturing process of an electrically-sensitive electronic component, Electro-Static Discharge (ESD) needs to be promptly dissipated in order to prevent damage to the electronic component caused by the static electricity. In contrast to this, the optical connector cleaning tool 200 of the present embodiment can promptly dissipate the static electricity generated in the guide nozzle 290 by sliding with the case 220 as described above, and therefore can be used in the ESD protected area.

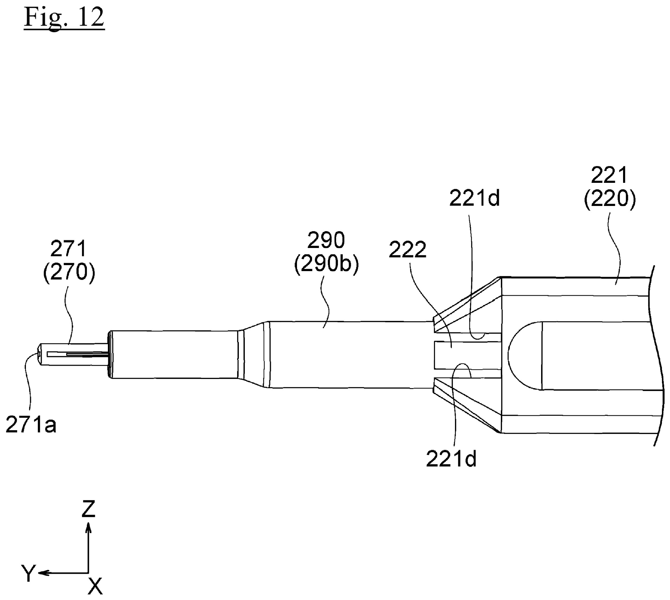

As illustrated in FIG. 12, a leaf spring 222 may be disposed at a front end portion of the case body 221. FIG. 12 is a side view illustrating a modification of the case 220 in the present embodiment.

As illustrated in FIG. 12, the case 220 may include the leaf spring 222 in the front end portion. Slits 221d are formed on both side of the leaf spring 222 in the front end portion, and the leaf spring 222 is elastically deformable. Similarly to the case 120 illustrated in FIG. 6(a) and FIG. 6(b) described above, the case 220 includes a pair of the leaf springs 222 opposed to each other, and the pair of leaf springs 222 are disposed on side surfaces of the front end portion of the case body 221. The pair of leaf springs 222 are mutually opposed at intervals, and the guide nozzle 290 is interposed between the pair of leaf springs 222.

The pair of leaf springs 222 are in contact with an outer surface 290b of the guide nozzle 290, and the leaf springs 222 press the guide nozzle 290 inward. Accordingly, the case 220 and the guide nozzle 290 are reliably in contact by means of the leaf springs 222, and therefore, the case 220 and the guide nozzle 290 are electrically connected in a stable manner via these leaf springs 222, and the case 220 and the guide nozzle 290 are stably and electrically conducted with each other. That is, the electrically conductive path 201 leading from the guide nozzle 290 to the case 220 via these leaf springs 222 is stably formed. The leaf spring 222 corresponds to an example of "second leaf spring" in the aspect of the present invention. The outer surface 290b corresponds to an example of "outer surface" in the aspect of the present invention, and in the present case, "inward" is a direction from the case 220 toward the guide nozzle 290.

Although not particularly illustrated, when the case 220 includes the leaf spring 222, the guide nozzle 290 does not need to include the leaf spring 298. The case 220 may include an elastic body other than a leaf spring instead of the leaf spring 222, and this elastic body may be in contact with the guide nozzle 290 and press the guide nozzle 290.

Note that the embodiments described above are described for ease of understanding the present invention, and are not described to limit the present invention. Accordingly, each component disclosed in the above-described embodiments is intended to encompass all design changes and equivalents falling within the technical scope of the present invention.

### Description of Reference Numerals

- 10: Optical connector (multi-fiber)
- 11: Ferrule
- 12: Connection end surface
- 20: Optical connector (single-fiber)
- 21: Ferrule
- 22: Connection end surface
- 100: Optical connector cleaning tool (for multi-fiber)
- 101: Conductive path
- 105: Cleaning element
- 110: Tool body
- 120: Case
- 122: Leaf spring
- 130: Housing
- 141: Winding bobbin
- 145: Feeding bobbin
- 150: Extending member
- 160: Cleaning shaft
- 170: Cleaning head
- 171a: Pressing surface
- 180: Rack shaft
- 190: Guide nozzle
- 198: Leaf spring portion
- 200: Optical connector cleaning tool (for single-fiber)
- 201: Conductive path
- 205: Cleaning element
- 220: Case
- 222: Leaf spring
- 230: Cleaning unit
- 241: Winding bobbin
- 245: Feeding bobbin
- 260: Cleaning shaft
- 270: Cleaning head
- 271a: Pressing surface
- 280: Shaft member
- 290: Guide nozzle
- 298: Leaf spring
- 300: Hand of operator

## Claims

1. An optical connector cleaning tool that cleans a connection end surface of an optical connector, comprising:
a cleaning shaft comprising a cleaning head at a front end, the cleaning head having a pressing surface that presses a cleaning element against the connection end surface, the cleaning element being hung on the pressing surface;
a tubular member that houses the cleaning shaft; and
a case that houses a base end portion of the tubular member such that the tubular member is relatively movable, wherein
the tubular member and the case have electrical conductivity,
the tubular member or the case comprises an elastic deformation portion that is in contact with the case or the tubular member and presses the case or the tubular member, and
the tubular member and the case are electrically connected via the elastic deformation portion.

2. The optical connector cleaning tool according to claim 1, wherein
the elastic deformation portion includes a first leaf spring included in the tubular member, and
the first leaf spring is in contact with an inner surface of the case and presses the inner surface outward.

3. The optical connector cleaning tool according to claim 1 or 2, wherein
the elastic deformation portion includes a second leaf spring included in the case, and
the second leaf spring is in contact with an outer surface of the tubular member and presses the outer surface inward.

4. The optical connector cleaning tool according to any one of claims 1 to 3, wherein
the elastic deformation portion has a pressing force Fₐ to press the case or the tubular member, and the pressing force Fₐ satisfies Formula (1) below. $0.5 \left[N\right] < {F}_{a} < 12 \left[N\right]$ (1)

5. The optical connector cleaning tool according to any one of claims 1 to 4, wherein
the case comprises a holding portion held by an operator who operates the optical connector cleaning tool.

6. The optical connector cleaning tool according to any one of claims 1 to 5, wherein
the tubular member and the case are made of an electrically conductive resin material.

7. The optical connector cleaning tool according to any one of claims 1 to 6, wherein
the optical connector cleaning tool comprises a supply collection mechanism that supplies the cleaning element to the pressing surface of the cleaning head and collects the cleaning element from the pressing surface as the tubular member relatively moves with respect to the case.
